# EUROPEAN PATENT SPECIFICATION

(11) **EP 0 555 777 B1**
(45) Date of publication and mention of the grant of the patent: **16.07.1997**
(21) Application number: 93101783.4
(22) Date of filing: 05.02.1993
(51) Int. Cl.: B01J 8/02, C01C 1/04

(54) **Method of modernising in-situ Braun-type converters for heterogeneous synthesis and converters thus obtained**
Verfahren zur Modernisierung von Braun-Konvertoren für heterogene Synthese und entspechend modernisierten Konvertoren
Procédé pour la modernisation des convertisseurs pour la synthèse hetérérogène du type Braun et convertisseurs ainsi modifiés.

(30) Priority: 12.02.1992 CH 409/92
(43) Date of publication of application: 18.08.1993
(73) Proprietor: AMMONIA CASALE S.A., CH-6900 Lugano-Besso (CH); Zardi, Umberto, CH-6932 Breganzona (Ti) (CH)
(72) Inventor: Zardi, Umberto, CH-6932 Breganzona (CH); Pagani, Giorgio, I-20142 Milan (IT)
(74) Representative: Bottero, Claudio

(56) References cited:
- EP-A- 0 190 516
- EP-A- 0 269 854
- "Ammonia synthesis in two stages", Nitrogen, No. 82, March/April 1973, pages 34-36.
- "Steel for hydrogen service at elevated temperatures and pressures in petroleum refineries and petrochemical plants", API publication 941, Fourth edition, April 1990, pages 1-4.

## Description

This invention refers to a method to modernize converters for heterogeneous synthesis at high temperatures and pressures, in particular ammonia, having at least one external pressure vessel having an upper majority zone substantially cylindrical and a lower minority zone which is substantially reversed; an internal cartridge that is open at the top, creates a gas passage between the external side and internal side of the shell, and is filled with catalyst through which the synthesis gas rally passes from top to bottom; inlets for the fresh synthesis gases and for the cooling gases; and an outlet for the reacted gases.

In particular the invention refers to a method of the said kind which modifies, with an "in-situ" operation, for instance, converters of the preceding type, known as Braun reactors, and protects the shell walls from high temperatures.

These converters for the conversion of nitrogen ammonia and hydrogen in the presence of catalyst, function in very severe operating conditions, the shell walls and the feed openings being put under temperatures in the range of 400°C.

The construction materials of the reactor must be highly resistant to thermal stresses and are thus made of steel 2,25 Cr 1 Mo.

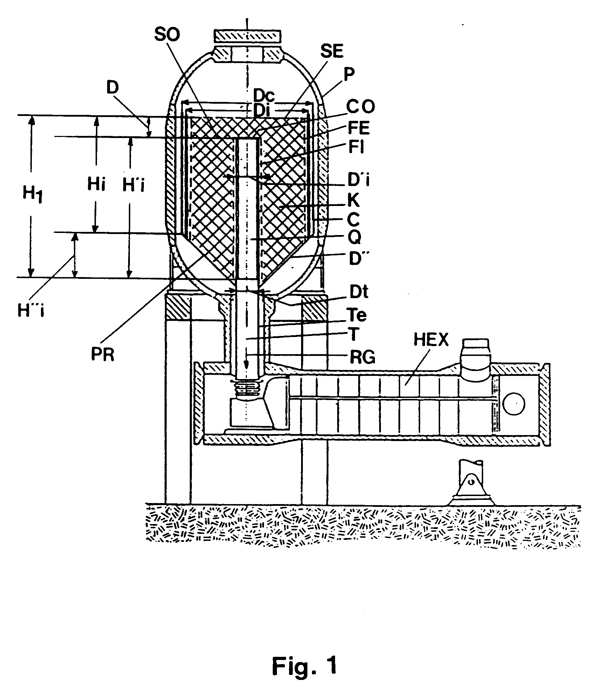

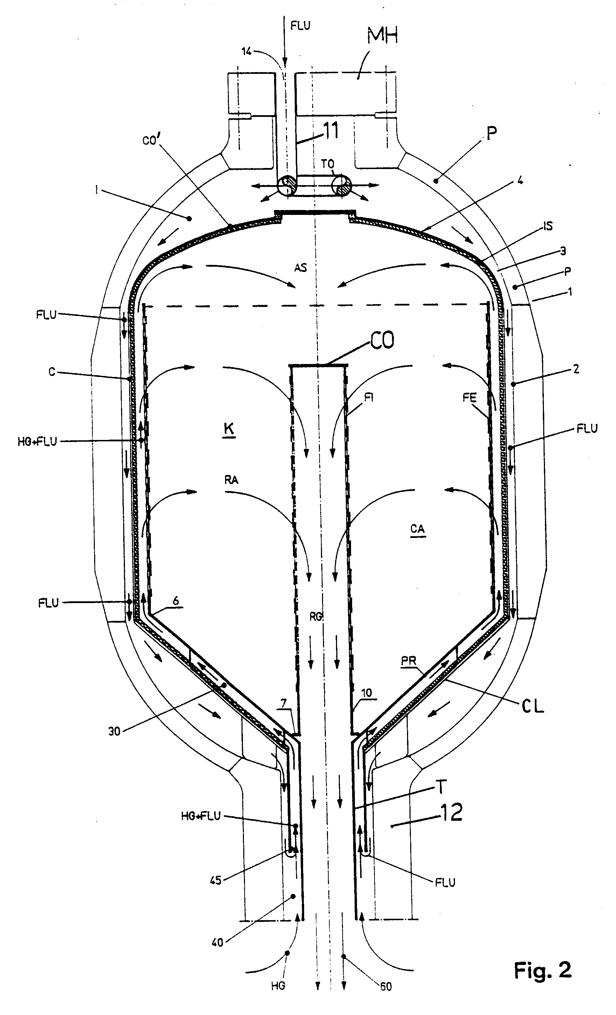

In order to clearly show this idea, Fig. 1 attached hereto shows Fig. 2 of US patent No.4.935.210, the description of which is considered herein. P indicates the shell in which the cartridge (C) (of diameter DC) is introduced, and the cylindrical perforated walls (FE) of diameter (Di) and height (Hi), and the walls (FI) of diameter (D'i) and height (H'i). On the top the closed manhole is shown (but without a reference). The synthesis gas enters from the bottom and crosses the airspace between the shell (P)and the cartridge (C).

The conventional Braun-type converters have greatly improved their performances thanks to the modernization according to the United States Patent no. 4,935,210.

European Patent application EP-A-0 190 516, on the other hand, discloses a horizontal converter for heterogeneous catalytic synthesis comprising a single catalyst bed within an outer pressure resisting shell, wherein the shell is thermally protected by circulating a cooling gas in an airspace defined between the catalyst bed and the shell inner wall.

However, only recently were deep cracks found in the shell walls of many converters which have been in service already many years. The necessary crack repair works are considered very serious, and imply the closure or shutdown of the plant for an undetermined, but lengthy period of time. In addition, even in the case that these expensive repairs should be successful, there is still the risk that the cracks may reappear (the same cracks that were repaired, and/or new ones), since the primary and original cause of the cracks had not been eliminated.

This first aim of this invention is to provide a method for the modernization of axial Braun-type reactors, in particular for their transformation into axial-radial reactors, in which the danger of other cracks in the shell walls and feed openings in also prevented.

Another aim of this invention is a reactor of the Braun-type transformed into an axial-radial converter type with a reduced volume of catalyst, but of fine granulometry, flushed with a protective gas against the cracks.

Another aim of this invention is a converter for heterogeneous synthesis, in particular of ammonia, of the Braun-type with fine catalyst which is axially-radially crossed, and with shell walls protected against high temperatures and without any cracks.

These other aims of the invention are achieved by a method and converter defined in the appended claims. According to the invention, the internal shell walls, exposed to severe thermal conditions (400°C) typical of axial Braun-type converters, are protected by investing them with fluxes of feed gas at temperatures from 250°C to 300°C.

In particular, the realization of the method as per the preceding U.S. Patent No. 4,935,210 of the Applicants, for the modernization of the Braun converters and for their transformation into axial-radial reactors by means of inserting a cartridge and, inside it, two cylindrical differentially perforated walls, characteristically adopts at least the following steps:
- rendering the upper end of the cartridge impermeable to external gases;
- applying a highly thermal insulation to the internal cartridge walls;
- making a flux of fresh gas flow at temperatures between 250 and 300°C, but preferably at 270°C flow in the interspace between the internal walls of the shell and external walls of the cartridge;
- use of a new gas inlet feed opening through the manhole at the upper end of the shell.

The converters, as per United States Patent No. 4,935,210, are also characterized by a closed cartridge with an upper cover and a layer of insulating material, by an inlet of cooling gas preferably made in the manhole and by a mixing zone of reaction gas, which is preheated to reaction temperature, and cooling gas.

The various aspects and advantages of the invention are better shown in the description of a preferred form of embodiment, as illustrated in the attached drawing (Fig. 2), which is a schematic and partial section of the Braun reactor with a plane containing the longitudinal axis of the reactor. As in the United States Patent Number 4,935,210, (P) indicates the reactor shell having an external wall (1) and an internal wall (2) within which a cartridge (C) is placed, in such a way as to create an airspace (I) between the internal wall (2) of (P) and the external wall (3) of (C).

Inside (C) the cylindrical perforated walls (FE) are inserted slightly below that of the cartridge (C), and the wall (FI) of diameter (D''i), decisively lower than that of (FE). The said walls are not perforated on the lower conical trunk portion (PR) that develops from point (6) until the feed opening (7), while the internal tubular wall (FI) is not perforated on a lower portion (10), on which the final part of the zone of the conical turn portion (PR) is coupled.

Characteristically, the upper end of the cartridge (C) is now closed with a cover (CO'), while its internal wall (4) is equipped with a layer of highly insulating material (IS), for instance, kaowool, the thickness of which is in the order of a few centimeters.

According to another aspect of the invention, the upper end of the reactor (in the manhole MH), an inlet (14) is made for the cooling fluid (FLU), which is provided with a pipe (11), extending through the manhole (MH), having a distribution torus (TO) on the upper end of the cartridge (C); the fluid then circulates in the airspace (I) between the shell (P) and the cartridge (C), descending down to the lower end (45) of the cartridge, where is mixed with the flux of synthesis gas (HG) preheated to reaction temperature (340ö440°C, preferably approximately 400°C) in external exchangers (not represented), but of the HEX type in Figure 1.

The mixture of HG + FLU ascends towards the top of the airspace (30) between the wall substantially perforated (FE) and the cartridge (C); a minority portion of this mixture passes axially through (As) the upper zone of the catalytic bed (K), while the majority portion of the mixture HG + FLU passes radially through (RA) the zone, which are also a majority zone, of said catalytic mass (CA). The reacted gases (RG) are collected in the tubular wall substantially perforated (FI) and exit at the bottom (arrow 60) in order to be carried to the external heat exchangers (type HEX as shown in Figure 1).

It is true that with respect to conventional Braun converters, a certain volume of catalyst is lost, i.e. that which is now occupied by the airspaces (I) and (30) as well as by the delimited space from the pipe (PI); but it is also true that this loss of catalyst volume is largely compensated by the fact that now the catalytic mass (CA) is made of fine granulometric catalyst with a high contact surface, contrary to the catalyst of large granulometric type which was required to be used in conventional converters.

## Claims

1. A method of modernizing in-situ a Braun-type converter for heterogeneous synthesis, the converter comprising an external pressure shell (P), a feed duct (12) for introducing fresh synthesis gas into said shell (P), an outlet tube (T) for withdrawing reacted gases (RG) axially positioned in the feed duct (12), a cartridge (C) inside the shell (P) open on top an filled with catalyst arranged in a catalytic bed (K) through which the synthesis gas axially passes from top to bottom, the cartridge (C) having a diameter (Dc) slightly smaller than that of the external pressure shell (P), said method comprising the steps of delimiting the catalytic bed with:
- a cylindrical outer wall (Fe) inside and in the vicinity of said cartridge (C), the cylindrical outer wall (Fe) being permeable by gas for at least the major portion of its height (Hi) and having a diameter (Di) only slightly smaller than that of the cartridge (C);
- a cylindrical internal wall (Fi) also permeable by gas for at least the major portion of its height (H'i), the cylindrical internal wall (Fi) having a diameter (D'i) much smaller than the diameter (Di) of the cylindrical outer wall (Fe) and of the same order of magnitude of diameter (Dt) of the outlet tube (T), the top (SO) of said cylindrical internal wall (Fi) being closed by a cover (CO) possibly permeable by gas at least in part;
- a lower wall (PR) having a diameter (D'') decreasing towards the bottom starting from the diameter (Di) of the cylindrical outer wall (Fe) towards the diameter (D'i) of the cylindrical internal wall (Fi);
characterized in that the method further comprises the steps of:
- providing said cartridge (C) with:
i) a top cover (CO');
ii) a substantially cylindrical lower end (45), said lower end (45) extending downwardly into said feed duct (12) between an internal cylindrical wall thereof and said outlet tube (T);
iii) a lower portion (CL), substantially parallel to said lower wall (PR) of the catalytic bed (K), having a diameter decreasing starting fom the diameter (Dc) of the cartridge (C) towards the diameter of said substantially cylindrical lower end (45);
- applying a highly insulating material (IS) to the internal walls (4) of the cartridge (C);
- providing an inlet (14) through the shell (P) for feeding a cooling fluid (FLU) between the cartridge (C) and the shell (P) down to said lower end (45) of the cartridge (C).

2. A method according to claim 1, characterized in that the inlet (14) of said cooling fluid (FLU) is provided on top of the shell (P) through a manhole (MH).

3. A method according to claim 2, characterized in that it further comprises the step of providing said inlet (14) of the cooling fluid (FLU) with a pipe (11) extending through said manhole (MH), the pipe (11) having a distribution torus (TO) positioned inside the shell (P) on the upper end of the cartridge (C).

4. A Braun-type converter for heterogeneous synthesis comprising:
- an external pressure shell (P),
- a feed duct (12) for introducing fresh synthesis gas into said shell (P),
- an outlet tube (T) for withdrawing reacted gases (RG) axially positioned in the feed duct (12),
- a cartridge (C) inside the shell (P), having a diameter (Dc) slightly smaller than that of the external pressure shell (P), filled with catalyst arranged in a catalytic bed (K) through which the synthesis gas axially passes from top to bottom,
- a cylindrical outer wall (Fe) inside and in the vicinity of said cartridge (C), the cylindrical outer wall (Fe) being permeable by gas for at least the major portion of its height (Hi) and having a diameter (Di) only slightly smaller than that of the cartridge (C);
- a cylindrical internal wall (Fi) also permeable by gas for at least the major portion of its height (H'i), the cylindrical internal wall (Fi) having a diameter (D'i) much smaller than the diameter (Di) of the cylindrical outer wall (Fe) and of the same order of magnitude of diameter (Dt) of the outlet tube (T), the top (SO) of said cylindrical internal wall (Fi) being closed by a cover (CO) possibly permeable by gas at least in part;
- a lower wall (PR) having a diameter (D'') decreasing towards the bottom starting from the diameter (Di) of the cylindrical outer wall (Fe) towards the diameter (D'i) of the cylindrical internal wall (Fi);
characterized in that the converter further comprises:
- a top cover (CO') provided on said cartridge (C),
- a substantially cylindrical lower end (45) extending downwardly from said cartridge (C) into said feed duct (12) between an internal cylindrical wall thereof and said outlet tube (T);
- a cartridge lower portion (CL), substantially parallel to said lower wall (PR) of the catalytic bed (K), having a diameter decreasing starting fom the diameter (Dc) of the cartridge (C) towards the diameter of said substantially cylindrical lower end (45);
- a highly insulating material (IS) applied to the internal walls (4) of the cartridge (C);
- an inlet (14) through the shell (P) for feeding a cooling fluid (FLU) between the cartridge (C) and the shell (P) down to said lower end (45) of the cartridge (C).

5. A converter according to claim 4, further comprising a zone proximate to said lower end (45) of the cartridge (C) for mixing synthesis preheated gas (HG) with said cooling fluid (FLU).

6. A converter according to claim 4, characterized in that the inlet (14) of said cooling fluid (FLU) is provided on top of the shell (P) through a manhole (MH).

7. A converter according to claim 6, characterized in that said inlet (14) of the cooling fluid (FLU) is provided with a pipe (11) extending through said manhole (MH), the pipe (11) having a distribution torus (TO) positioned inside the shell (P) on the upper end of the cartridge (C).

8. A converter according to claim 4, characterized in that the catalyst within said bed (K) has a fine granulometry with a high contact surface.

## Patentansprüche

1. Verfahren zum Modernisieren eines In-situ-Braun-Reaktors für eine heterogene Synthese, wobei der Reaktor ein äußeres Druckgehäuse (P), eine Zuführleitung (12) zum Zuführen von frischem Synthesegas in das Gehäuse (P), ein Auslaßrohr (T) zum Abziehen reagierter Gase (RG), welches axial in der Zuführleitung (12) angeordnet ist, eine Kartusche (C) innerhalb des Gehäuses (P), welche oben offen ist und mit einem Katalysator gefüllt ist, der in einem Katalysebett (K) angeordnet ist, durch welches das Synthesegas axial von oben nach unten strömt, wobei die Kartusche (C) einen Durchmesser (Dc) aufweist, der geringfügig kleiner als derjenige des äußeren Druckgehäuses (P) ist,
wobei das Verfahren die Schritte des Begrenzens des Katalysebetts mit
- einer zylindrischen äußeren Wand (Fe) innerhalb und in der Nähe der Kartusche (C), wobei die zylindrische äußere Wand (Fe) für Gas zumindest über den größeren Teil ihrer Höhe (Hi) durchlässig ist und einen Durchmesser (Di) aufweist, welcher nur geringfügig kleiner als derjenige der Kartusche (C) ist,
- einer zylindrischen inneren Wand (Fi), welche ebenfalls über zumindest den größeren Teil ihrer Höhe (H'i) für Gas durchlässig ist, wobei die zylindrische innere Wand (Fi) einen Durchmesser (D'i) aufweist, welcher wesentlich kleiner als der Durchmesser (Di) der zylindrischen äußeren Wand (Fe) und von der gleichen Größenordnung wie der Durchmesser (Dt) des Auslaßrohrs (T) ist und wobei die Oberseite (SO) der zylindrischen inneren Wand (Fi) durch eine Abdeckung (CO) verschlossen ist, welche möglicherweise für Gas zumindest teilweise durchlässig ist,
- einer unteren Wand (PR) mit einem Durchmesser (D''), der nach unten hin von dem Durchmesser (Di) der zylindrischen äußeren Wand (Fe) zu dem Durchmesser (D'i) der zylindrischen inneren Wand (Fi) abnimmt,
umfaßt,
dadurch gekennzeichnet, daß das Verfahren weiterhin die folgenden Schritte umfaßt:
- Versehen der Kartusche (C) mit
i) einer oberen Abdeckung (CO'),
ii) einem im wesentlichen zylindrischen unteren Ende (45), wobei sich das untere Ende (45) nach unten in die Zuführleitung (12) hinein zwischen einer zylindrischen Innenwand derselben und dem Auslaßrohr (T) erstreckt,
ii)) einem unteren Teil (CL), welcher im wesentlichen parallel zu der unteren Wand (PR) des Katalysebetts (K) ist und einen Durchmesser aufweist, der von dem Durchmesser (Dc) der Kartusche (C) zu dem Durchmesser des im wesentlichen zylindrischen unteren Endes (45) abnimmt,
- Anbringen eines hochisolierenden Materials (IS) an den Innenwänden (4) der Kartusche (C),
- Vorsehen eines Einlasses (14) durch das Gehäuse (P) zum Zuführen eines Kühlfluids (FLU) zwischen der Kartusche (C) und dem Gehäuse (P) nach unten zu dem unteren Ende (45) der Kartusche (C).

2. Verfahren nach Anspruch 1, dadurch gekennzeichnet, daß der Einlaß (14) für das Kühlfluid (FLU) auf der Oberseite des Gehäuses (P) über ein Mannloch (MH) vorgesehen wird.

3. Verfahren nach Anspruch 2, dadurch gekennzeichnet, daß es weiterhin den Schritt des Vorsehens des Einlasses (14) für das Kühlfluid (FLU) über ein Rohr (11) umfaßt, welches sich durch das Mannloch (MH) erstreckt, wobei das Rohr (11) einen Verteilungstorus (TO) aufweist, der sich innerhalb des Gehäuses (P) am oberen Ende der Kartusche (C) befindet.

4. Braun-Reaktor für eine heterogene Synthese, welcher umfaßt:
- ein äußeres Druckgehäuse (P),
- eine Zuführleitung (12) zum Einleiten von frischem Synthesegas in das Gehäuse (P),
- ein Auslaßrohr (T) zum Abziehen der reagierten Gase (RG), welches axial in der Zuführleitung (12) angeordnet ist,
- eine Kartusche (C) in dem Gehäuse (P) mit einem geringfügig kleineren Durchmesser (Dc) als demjenigen des äußeren Druckgehäuses (P), welche mit einem Katalysator gefüllt ist, der in einem Katalysebett (K) angeordnet ist, durch welches das Synthesegas axial von oben nach unten strömt,
- eine zylindrische äußere Wand (Fe) innerhalb der Kartusche (C) und in der Nähe derselben, wobei die zylindrische äußere Wand (Fe) für Gas zumindest über den größeren Teil ihrer Höhe (Hi) durchlässig ist und einen Durchmesser (Di) aufweist, der nur geringfügig kleiner als derjenige der Kartusche (C) ist,
- eine zylindrische innere Wand (Fi) welche ebenfalls für Gas über zumindest den größeren Teil ihrer Höhe (H'i) durchlässig ist, wobei die zylindrische innere Wand (Fi) einen Durchmesser (D'i) aufweist, der wesentlich kleiner als der Durchmesser (Di) der zylindrischen äußeren Wand (Fe) und von derselben Größenordnung wie der Durchmesser (Dt) des Auslaßrohrs (T) ist, wobei die Oberseite (SO) der zylindrischen inneren Wand (Fi) durch eine Abdeckung (CO) verschlossen ist, welche möglicherweise für Gas zumindest teilweise durchlässig ist,
- eine untere Wand (PR) mit einem Durchmesser (D''), welcher von dem Durchmesser (Di) der zylindrischen äußeren Wand (Fe) nach unten zu dem Durchmesser (D'i) der zylindrischen inneren Wand (Fi) abnimmt,
dadurch gekennzeichnet, daß der Reaktor weiterhin umfaßt:
- eine obere Abdeckung (CO'), welche an der Kartusche (C) vorgesehen ist,
- ein im wesentlichen zylindrisches unteres Ende (45), welches sich nach unten von der Kartusche (C) in die Zuführleitung (12) zwischen einer zylindrischen Innenwand derselben und dem Auslaßrohr (T) erstreckt,
- einen unteren Kartuschenabschnitt (CL), welcher im wesentlichen parallel zu der unteren Wand (PR) des Katalysebetts (K) ist und einen Durchmesser aufweist, welcher von dem Durchmesser (Dc) der Kartusche (C) zu dem Durchmesser des im wesentlichen zylindrischen unteren Endes (45) abnimmt,
- ein hochisolierendes Material (IS), welches an den Innenwänden (4) der Kartusche (C) angebracht ist,
- einen Einlaß (14) durch das Gehäuse (P) zum Zuführen eines Kühlfluids (FLU) zwischen der Kartusche (C) und dem Gehäuse (P) nach unten zu dem unteren Ende (45) der Kartusche (C).

5. Reaktor nach Anspruch 4, welcher weiterhin eine dem unteren Ende (45) benachbarte Zone der Kartusche (C) zum Mischen von vorgeheiztem Synthesegas (HG) mit dem Kühlfluid (FLU) umfaßt.

6. Reaktor nach Anspruch 4, dadurch gekennzechnet, daß der Einlaß (14) für das Kühlfluid (FLU) auf der Oberseite des Gehäuses (P) über ein Mannloch (MH) vorgesehen ist.

7. Reaktor nach Anspruch 6, dadurch gekennzeichnet, daß der Einlaß (14) des Kühlfluids (FLU) mit einem Rohr (11) versehen ist, welches sich durch das Mannloch (MH) erstreckt, wobei das Rohr (F) einen Verteilertorus (TO) aufweist, der sich innerhalb des Gehäuses (P) an dem oberen Ende der Kartusche (C) befindet.

8. Reaktor nach Anspruch 4, dadurch gekennzeichnet, daß der Katalysator in dem Bett (K) eine feine Granulometrie mit einer großen Kontaktoberfläche aufweist.

## Revendications

1. Procédé de modernisation in situ d'un convertisseur de type Braun pour synthèse hétérogène, le convertisseur comportant une enveloppe extérieure sous pression (P), un conduit d'admission (12) pour l'introduction du gaz de synthèse neuf dans ladite enveloppe (P), un tube d'évacuation (T) pour l'extraction des gaz de réaction (RG) placé dans l'axe du conduit d'admission (12), une cartouche (C) interne à l'enveloppe (P) ouverte en haut et remplie d'un catalyseur disposé en lit catalytique (K) traversé de haut en bas suivant son axe par le gaz de synthèse, la cartouche (C) ayant un diamètre (Dc) légèrement inférieur à celui de l'enveloppe extérieure sous pression (P), ledit procédé assurant la délimitation du lit catalytique par :
- une paroi externe cylindrique (Fe) située à l'intérieur et au voisinage de ladite cartouche (C), la paroi externe (Fe) étant perméable au gaz sur au moins la majeure partie de sa hauteur (Hi) et ayant un diamètre (Di) seulement légèrement inférieur à celui de la cartouche (C) ;
- une paroi interne cylindrique (Fi) également perméable au gaz au moins sur la majeure partie de sa hauteur (H'i), la paroi interne cylindrique (Fi) ayant un diamètre (D'i) beaucoup plus petit que le diamètre (Di) de la paroi externe cylindrique (Fe) et du même ordre de grandeur que le diamètre (Dt) du tube d'évacuation (T), le haut (SO) de ladite paroi interne cylindrique (Fi) étant fermé par un couvercle (CO) éventuellement perméable au gaz au moins en partie ;
- une paroi inférieure (PR) ayant un diamètre (D'') décroissant de haut en bas depuis le diamètre (Di) de la paroi externe cylindrique (Fe) jusqu'au diamètre (D'i) de la paroi interne cylindrique (Fi) ;
caractérisé en ce que le procédé comprend en outre les étapes consistant à :
- munir ladite cartouche (C) :
i) d'un couvercle supérieur (CO'),
ii) d'une extrémité inférieure sensiblement cylindrique (45), ladite extrémité inférieure (45) se prolongeant vers le bas dans ledit conduit d'admission (12) entre une paroi cylindrique interne de celui-ci et ledit tube d'évacuation (T) ;
iii) d'une partie inférieure (CL), sensiblement parallèle à ladite paroi inférieure (PR) du lit catalytique (K), ayant un diamètre décroissant depuis le diamètre (Dc) de la cartouche (C) jusqu'au diamètre de ladite extrémité inférieure sensiblement cylindrique (45) ;
- appliquer un matériau à haut pouvoir isolant (IS) sur les parois internes (4) de la cartouche (C) ;
- prévoir une entrée (14) dans l'enveloppe (P) pour faire circuler un fluide de refroidissement (FLU) entre la cartouche (C) et l'enveloppe (P) jusqu'à ladite extrémité inférieure (45) de la cartouche (C).

2. Procédé selon la revendication 1, caractérisé en ce que l'entrée (14) dudit fluide de refroidissement (FLU) se fait en partie haute de l'enveloppe (P) au travers d'un regard (MH).

3. Procédé selon la revendication 2, caractérisé en ce qu'il comprend en outre l'étape consistant à munir ladite entrée (14) du fluide de refroidissement (FLU) d'un tuyau (11) traversant ledit regard (MH), le tuyau (11) étant muni d'un tore de distribution (TO) placé à l'intérieur de l'enveloppe (P) sur la partie supérieure de la cartouche (C).

4. Convertisseur de type Braun pour synthèse hétérogène comprenant :
- une enveloppe extérieure sous pression (P),
- un conduit d'admission (12) pour l'introduction du gaz de synthèse neuf dans ladite enveloppe (P),
- un tube d'évacuation (T) pour extraire les gaz de réaction (RG), placé dans l'axe du conduit d'admission (12),
- une cartouche (C) interne à l'enveloppe (P), ayant un diamètre (Dc) légèrement inférieur à celui de l'enveloppe extérieure sous pression (P), remplie d'un catalyseur disposé en un lit catalytique (K) traversé dans l'axe et de haut en bas par le gaz de synthèse.
- une paroi externe cylindrique (Fe) située à l'intérieur et au voisinage de ladite cartouche (C), la paroi externe (Fe) étant perméable au gaz sur au moins la majeure partie de sa hauteur (Hi) et ayant un diamètre (Di) seulement légèrement inférieur à celui de la cartouche (C) ;
- une paroi interne cylindrique (Fi) également perméable au gaz au moins sur la majeure partie de sa hauteur (H'i), la paroi interne cylindrique (Fi) ayant un diamètre (D'i) beaucoup plus petit que le diamètre (Di) de la paroi externe cylindrique (Fe) et du même ordre de grandeur que le diamètre (Dt) du tube d'évacuation (T), le haut (SO) de ladite paroi interne cylindrique (Fi) étant fermé par un couvercle (CO) éventuellement perméable au gaz au moins en partie ;
- une paroi inférieure (PR) ayant un diamètre (D'') décroissant de haut en bas depuis le diamètre (Di) de la paroi externe cylindrique (Fe) jusqu'au diamètre (D'i) de la paroi interne cylindrique (Fi) ;
caractérisé en ce que le convertisseur comprend en outre :
- un couvercle supérieur (CO') installé sur ladite cartouche (C),
- une extrémité inférieure sensiblement cylindrique (45) se prolongeant vers le bas depuis ladite cartouche (C) dans ledit conduit d'admission (12) entre une paroi cylindrique interne de celui-ci et ledit tube d'évacuation (T) ;
- une partie inférieure de cartouche (CL), sensiblement parallèle à ladite paroi inférieure (PR) du lit catalytique (K), ayant un diamètre décroissant depuis le diamètre (Dc) de la cartouche (C) jusqu'au diamètre de ladite extrémité inférieure sensiblement cylindrique (45) ;
- un matériau à haut pouvoir isolant (IS) appliqué sur les parois internes (4) de la cartouche (C) ;
- une entrée (14) dans l'enveloppe (P) pour faire circuler un fluide de refroidissement (FLU) entre la cartouche (C) et l'enveloppe (P) jusqu'à ladite extrémité inférieure (45) de la cartouche (C).

5. Convertisseur selon la revendication 4, comprenant en outre une zone située à proximité de ladite extrémité inférieure (45) de la cartouche (C), destinée au mélange des gaz de synthèse préchauffés (HG) avec ledit fluide de refroidissement (FLU).

6. Convertisseur selon la revendication 4, caractérisé en ce que l'entrée (14) dudit fluide de refroidissement (FLU) se fait en partie haute de l'enveloppe (P) au travers d'un regard (MH).

7. Convertisseur selon la revendication 6, caractérisé en ce que ladite entrée (14) dudit fluide de refroidissement (FLU) est constituée d'un tuyau (11) traversant ledit regard (MH), le tuyau (11) étant muni d'un tore de distribution (TO) placé à l'intérieur de l'enveloppe (P) sur la partie supérieure de la cartouche (C).

8. Convertisseur selon la revendication 4, caractérisé en ce que le catalyseur constituant ledit lit (K) a une faible granulométrie et une surface de contact importante.
